(19) **Europäisches Patentamt** / **European Patent Office** / **Office européen des brevets**

(11) **EP 3 959 660 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **20717859.1**

(22) Anmeldetag: **08.04.2020**

(51) Internationale Patentklassifikation (IPC):
**G06N 3/09** (2023.01)   **G06N 3/045** (2023.01)
G06N 3/047 (2023.01)   G06N 3/082 (2023.01)

(52) Gemeinsame Patentklassifikation (CPC):
**G06N 3/045; G06N 3/09;** G06N 3/047; G06N 3/082

(86) Internationale Anmeldenummer:
**PCT/EP2020/060004**

(87) Internationale Veröffentlichungsnummer:
**WO 2020/216621 (29.10.2020 Gazette 2020/44)**

(54) **TRAINING TRAINIERBARER MODULE MIT LERN-DATEN, DEREN LABELS VERRAUSCHT SIND**

TRAINING TRAINABLE MODULES WITH LEARNING DATA, THE LABELS OF WHICH ARE SUBJECT TO NOISE

APPRENTISSAGE DE MODULES APTES À L'APPRENTISSAGE AVEC DES DONNÉES D'APPRENTISSAGE DONT LES ÉTIQUETTES SONT BRUITÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2019 DE 102019206047**

(43) Veröffentlichungstag der Anmeldung:
**02.03.2022 Patentblatt 2022/09**

(73) Patentinhaber: **Robert Bosch GmbH**
**70442 Stuttgart (DE)**

(72) Erfinder:
• **BELUCH, William Harris**
**70469 Stuttgart (DE)**
• **AUTENRIETH, Maximilian**
**73054 Eislingen/Fils (DE)**
• **KOEHLER, Jan Mathias**
**70199 Stuttgart (DE)**

(56) Entgegenhaltungen:
• **BRODLEY C E ET AL: "Identifying Mislabeled Training Data", ARXIV.ORG, CORNELL UNIVERSITY LIBRARY, 201 OLIN LIBRARY CORNELL UNIVERSITY ITHACA, NY 14853, 1 June 2011 (2011-06-01), XP080511687, DOI: 10.1613/JAIR.606**
• **SHI ZHONG ET AL: "Boosted Noise Filters for Identifying Mislabeled Data", 1 January 2015 (2015-01-01), ResearchGate, pages 1 - 19, XP055711403, Retrieved from the Internet <URL:https://www.researchgate.net/publication/228976157_Boosted_Noise_Filters_for_Identifying_Mislabeled_Data> [retrieved on 20200702]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft das Training trainierbarer Module, wie sie beispielsweise für Klassifikationsaufgaben und/oder Objekterkennung beim zumindest teilweise automatisierten Fahren eingesetzt werden.

Stand der Technik

Das Führen eines Fahrzeugs im Straßenverkehr durch einen menschlichen Fahrer wird in der Regel trainiert, indem ein Fahrschüler im Rahmen seiner Ausbildung immer wieder mit einem bestimmten Kanon an Situationen konfrontiert wird. Der Fahrschüler muss auf diese Situationen jeweils reagieren und bekommt durch Kommentare oder gar ein Eingreifen des Fahrlehrers eine Rückmeldung, ob seine Reaktion richtig oder falsch war. Dieses Training mit einer endlichen Anzahl von Situationen soll den Fahrschüler dazu befähigen, beim eigenständigen Führen des Fahrzeugs auch unbekannte Situationen zu meistern.

Um Fahrzeuge ganz oder teilweise automatisiert am Straßenverkehr teilnehmen zu lassen, wird angestrebt, diese mit in ganz ähnlicher Weise trainierbaren Modulen zu steuern. Diese Module erhalten beispielsweise Sensordaten aus dem Fahrzeugumfeld als Eingangsgrößen und liefern als Ausgangsgrößen Ansteuersignale, mit denen in den Betrieb des Fahrzeugs eingegriffen wird, und/oder Vorprodukte, aus denen derartige Ansteuersignale gebildet werden. Beispielsweise kann eine Klassifikation von Objekten im Umfeld des Fahrzeugs ein derartiges Vorprodukt sein.

Für dieses Training wird eine hinreichende Menge an Lern-Datensätzen benötigt, die jeweils Lern-Eingangsgrößenwerte und zugehörige Lern-Ausgangsgrößenwerte umfassen. Beispielsweise können die Lern-Eingangsgrößenwerte Bilder umfassen und mit der Information, welche Objekte in den Bildern enthalten sind, als Lern-Ausgangsgrößenwerte gelabelt sein.

In C.E. Brodley et al., "Identifying Mislabeled Training Data", https://arxiv.org/pdf/1106.0219, arXiv.org, Cornell University Library, 1. Juni 2011 (2011-06-01) wird ein Verfahren vorgeschlagen, in dem mehrere unterschiedliche Klassifikatoren als Filter zur Identifikation und Entfernung falsch gelabelter Trainingsdaten verwendet werden.

Offenbarung der Erfindung

Im Rahmen der Erfindung wurde ein Verfahren zum Trainieren eines trainierbaren Moduls entwickelt. Das trainierbare Modul übersetzt eine oder mehrere Eingangsgrößen in eine oder mehrere Ausgangsgrößen.

Unter einem trainierbaren Modul wird insbesondere ein Modul angesehen, das eine mit anpassbaren Parametern parametrierte Funktion mit großer Kraft zur Verallgemeinerung verkörpert. Die Parameter können beim Training eines trainierbaren Moduls insbesondere dergestalt angepasst werden, dass bei Eingabe von Lern-Eingangsgrößenwerten in das Modul die zugehörigen Lern-Ausgangsgrößenwerte möglichst gut reproduziert werden. Das trainierbare Modul kann insbesondere ein künstliches neuronales Netzwerk, KNN, beinhalten, und/oder es kann ein KNN sein.

Das Training erfolgt anhand von Lern-Datensätzen, die Lern-Eingangsgrößenwerte und zugehörige Lern-Ausgangsgrößenwerte enthalten. Dabei umfassen mindestens die Lern-Eingangsgrößenwerte Daten, die durch einen physikalischen Messprozess, und/oder durch eine teilweise oder vollständige Simulation eines solchen Messprozesses, und/oder durch eine teilweise oder vollständige Simulation eines mit einem solchen Messprozess beobachtbaren technischen Systems, erhalten wurden.

Dabei bezeichnet der Begriff "Lern-Datensatz" nicht die Gesamtheit aller zur Verfügung stehender Lern-Daten, sondern eine Kombination aus einem oder mehreren Lern-Eingangsgrößenwerten und genau diesen Lern-Eingangsgrößenwerten als Label zugeordneten Lern-Ausgangsgrößenwerten. Bei einem für die Klassifikation und/oder Regression eingesetzten trainierbaren Modul kann ein Lern-Datensatz beispielsweise ein Bild als Matrix von Lern-Eingangsgrößenwerten in Kombination mit den Softmax-Scores, die das trainierbare Modul hieraus idealerweise generieren sollte, als Vektor von Lern-Ausgangsgrößenwerten umfassen.

Im Rahmen des Verfahrens wird eine Mehrzahl von Abwandlungen des trainierbaren Moduls jeweils mindestens mit einer Teilmenge der Lern-Datensätze vortrainiert. Dabei unterscheiden sich die Abwandlungen so weit voneinander, dass sie bei fortschreitendem Lernen nicht deckungsgleich ineinander überführt werden. Die Abwandlungen können beispielsweise strukturell unterschiedlich sein. Beispielsweise können mehrere Abwandlungen von KNNs erzeugt werden, indem jeweils unterschiedliche Neuronen im Rahmen eines "Dropouts" deaktiviert werden. Die Abwandlungen können aber auch beispielsweise durch Vortraining mit hinreichend unterschiedlichen Teilmengen der insgesamt vorhandenen Lern-Datensätze, und/oder durch Vortraining ausgehend von hinreichend unterschiedlichen Initialisierungen, erzeugt werden.

Die Abwandlungen können beispielsweise unabhängig voneinander vortrainiert werden. Es ist jedoch auch beispielsweise möglich, das Vortraining zu bündeln, indem nur ein trainierbares Modul oder eine Abwandlung trainiert wird und erst nach Abschluss dieses Trainings aus diesem Modul, bzw. dieser Abwandlung, weitere Abwandlungen erzeugt werden.

Nach dem Vortraining werden Lern-Eingangsgrößenwerte mindestens eines Lern-Datensatzes allen Abwandlungen als Eingangsgrößen zugeführt. Diese identischen Lern-Eingangsgrößenwerte werden von den verschiedenen Abwandlungen in verschiedene Ausgangsgrößenwerte übersetzt. Aus der Abweichung dieser Ausgangsgrößenwerte voneinander wird ein Maß für die Unsicherheit dieser Ausgangsgrößenwerte ermittelt und dem Lern-Datensatz als Maß für dessen Unsicherheit zugeordnet.

Dabei können die Ausgangsgrößenwerte beispielsweise Softmax-Scores sein, die angeben, mit welchen Wahrscheinlichkeiten der Lern-Datensatz in welche der möglichen Klassen klassifiziert wird.

Für die Ermittlung der Unsicherheit aus einer Vielzahl Ausgangsgrößenwerte kann eine beliebige Statistikfunktion verwendet werden. Beispiele für solche Statistikfunktionen sind die Varianz, die Standardabweichung, der Mittelwert, der Median, ein geeignet gewähltes Quantil, die Entropie und das Variation Ratio.

Sofern die Abwandlungen des trainierbaren Moduls auf verschiedene Weisen erzeugt worden sind, beispielsweise einerseits durch "Dropouts" und andererseits durch sonstige strukturelle Änderungen oder durch eine andere Initialisierung des Vortrainings, können insbesondere beispielsweise die Abweichungen zwischen denjenigen Ausgangsgrößenwerten, die von auf verschiedene Weisen erzeugten Abwandlungen geliefert werden, getrennt voneinander verglichen werden. Es können also beispielsweise die Abweichungen zwischen Ausgangsgrößenwerten, die von durch "Dropouts" entstandenen Abwandlungen geliefert wurden, und die Abweichungen zwischen Ausgangsgrößenwerten, die von in sonstiger Weise strukturell geänderten Abwandlungen geliefert wurden, getrennt voneinander betrachtet werden.

Der Begriff der "Abweichungen" und der "Unsicherheit" ist in diesem Zusammenhang nicht auf den eindimensionalen, univariaten Fall beschränkt, sondern umfasst Größen beliebiger Dimension. Es können also beispielsweise mehrere Unsicherheits-Merkmale kombiniert werden, um eine multivariate Unsicherheit zu erhalten. Dies erhöht die Unterscheidungsgenauigkeit zwischen Lern-Datensätzen mit zutreffender Zuordnung der Lern-Ausgangsgrößenwerte zu den Lern-Eingangsgrößenwerten (d.h. "zutreffend gelabelten" Lern-Datensätzen) einerseits und Lern-Datensätzen mit unzutreffender Zuordnung (d.h. "unzutreffend gelabelten" Lern-Datensätzen) andererseits.

Es wird nun anhand der Unsicherheit eine Bewertung des Lern-Datensatzes ermittelt, die ein Maß dafür ist, inwieweit die Zuordnung der Lern-Ausgangsgrößenwerte zu den Lern-Eingangsgrößenwerten in dem Lern-Datensatz zutreffend ist.

Es wurde erkannt, dass sich bei einer zutreffenden Zuordnung der Lern-Ausgangsgrößenwerte zu den Lern-Eingangsgrößenwerten die unterschiedlichen Abwandlungen des trainierbaren Moduls eine Tendenz haben, übereinstimmende "Meinungen" bezüglich der Ausgangsgröße auszugeben. Die in der zutreffenden Zuordnung steckende Information setzt sich beim Vortraining gleichsam durch und wirkt sich dahingehend aus, dass die Unterschiede zwischen den Abwandlungen sich wenig oder gar nicht in unterschiedlichen Ausgangsgrößen manifestieren. Je weniger zutreffend die Zuordnung ist, desto mehr fehlt genau dieser Effekt und desto größer sind die Abweichungen zwischen den Ausgangsgrößenwerten, die die Abwandlungen jeweils zu den gleichen Lern-Eingangsgrößenwerten liefern.

Werden alle Lern-Datensätze in dieser Weise analysiert, dann wird sich typischerweise herausstellen, dass die Zuordnung für einige Lern-Datensätze in einem höheren Maße zutreffend ist als für andere Lern-Datensätze. Hierin spiegelt sich hauptsächlich wider, dass die Zuordnung, also das Labeln, bei den meisten Anwendungen trainierbarer Module von Menschen vorgenommen wird und dementsprechend fehleranfällig ist. Beispielsweise kann dem Menschen im Interesse eines hohen Durchsatzes pro Lern-Datensatz nur eine sehr kurze Zeit zur Verfügung stehen, so dass er in Zweifelsfällen nicht genauer nachforschen kann, sondern irgendeine Entscheidung treffen muss. Auch können beispielsweise unterschiedliche Bearbeiter die Kriterien, nach denen sie labeln sollen, unterschiedlich auslegen. Wirft beispielsweise ein Objekt in einem Bild einen Schatten, so kann ein Bearbeiter diesen Schatten mit zum Objekt zählen, da er ja durch die Anwesenheit des Objekts verursacht wurde. Hingegen kann ein anderer Bearbeiter den Schatten nicht zum Objekt zählen mit der Begründung, dass der Schatten nichts ist, womit ein Mensch oder Fahrzeug kollidieren kann.

Die letztendliche Nutzanwendung der ermittelten Bewertung besteht darin, selektiv Maßnahmen ergreifen zu können, um das letztendliche Training des trainierbaren Moduls zu verbessern. Das fertig trainierte Modul kann dann beispielsweise mit einer höheren Genauigkeit eine Klassifikation und/oder Regression von Messdaten vornehmen, die ihm als Eingangsgrößen vorgelegt werden. Damit wird in der jeweiligen technischen Anwendung, wie etwa beim zumindest teilweise automatisierten Fahren, auf der Basis gegebener Messdaten mit höherer Wahrscheinlichkeit eine der jeweiligen Situation angemessene Entscheidung getroffen.

Es werden anpassbare Parameter, die das Verhalten des trainierbaren Moduls charakterisieren, optimiert, mit dem Ziel, den Wert einer Kostenfunktion zu verbessern. Bei einem KNN umfassen diese Parameter beispielsweise die Gewichte, mit denen die einem Neuron zugeführten Eingaben zu einer Aktivierung dieses Neurons verrechnet werden. Die Kostenfunktion misst, inwieweit das trainierbare Modul die in Lern-Datensätzen enthaltenen Lern-Eingangsgrößenwerte auf die zugehörigen Lern-Ausgangsgrößenwerte abbildet. Beim herkömmlichen Training trainierbarer Module sind alle Lern-Datensätze in dieser Hinsicht gleichberechtigt, d.h., die Kostenfunktion misst, wie gut die Lern-Ausgangsgrößenwerte im Mittel reproduziert werden. In diesen Prozess wird die ermittelte Bewertung dahingehend eingebracht, dass die Gewichtung mindestens eines Lern-Datensatzes in der Kostenfunktion von seiner Bewertung abhängt.

Beispielsweise kann ein Lern-Datensatz umso geringer gewichtet werden, je schlechter seine Bewertung ist. Dies kann bis zu dem Punkt gehen, dass in Antwort darauf, dass die Bewertung eines Lern-Datensatzes ein vorgegebenes Kriterium erfüllt, dieser Lern-Datensatz aus der Kostenfunktion ganz herausfällt, d.h., für das weitere Training des trainierbaren Moduls gar nicht mehr verwendet wird. Hierhinter steckt die Erkenntnis, dass der Zusatznutzen, den die Berücksichtigung eines weiteren Lern-Datensatzes bringt, durch die sich aus einem ungenauen oder falschen Lern-Ausgangsgrößenwert im Trainingsprozess ergebenden Widersprüche ganz oder teilweise kompensiert, oder sogar überkompensiert, werden kann. Keine Information kann also besser sein als eine falsche Information.

In einer weiteren besonders vorteilhaften Ausgestaltung kann in Antwort darauf, dass die Bewertung eines Lern-Datensatzes ein vorgegebenes Kriterium erfüllt, eine Aktualisierung mindestens eines in diesem Lern-Datensatz enthaltenen Lern-Ausgangsgrößenwerts angefordert werden. Das Kriterium kann beispielsweise darin bestehen, dass die Bewertung des Lern-Datensatzes hinter einem vorgegebenen Mindeststandard zurückbleibt und/oder im Vergleich zu den anderen Lern-Datensätzen besonders schlecht ist. Die angeforderte Aktualisierung kann beispielsweise durch einen menschlichen Experten eingepflegt oder über ein Netzwerk abgerufen werden. Hierhinter steckt die Erkenntnis, dass viele beim Labeln auftretende Fehler Einzelfehler, wie beispielsweise Flüchtigkeitsfehler, sind. Die Notwendigkeit einer Aktualisierung kann sich aber auch beispielsweise in einer Situation ergeben, in der für das Training einer sicheren Erkennung bestimmter Objekte schlicht und einfach nicht genug Beispiele in den Lern-Datensätzen vorhanden sind. Beispielsweise kommen bestimmte Verkehrszeichen, wie etwa das Zeichen 129 "Ufer", vergleichsweise selten vor und können auf bei Testfahrten aufgenommenen Bildern unterrepräsentiert sein. Die angeforderte Aktualisierung gibt dem trainierbaren Modul dann gleichsam Nachhilfe in genau diesem Punkt.

Es wird anhand einer Vielzahl von Lern-Datensätzen eine Verteilung der Unsicherheiten ermittelt. Die Bewertung eines konkreten Lern-Datensatzes wird anhand dieser Verteilung ermittelt. In der Verteilung ist die Information aus der Vielzahl von Lern-Datensätzen aggregiert, so dass eine Entscheidung über die Bewertung eines konkreten Lern-Datensatzes mit einer besseren Genauigkeit getroffen werden kann.

Es wird die Verteilung als Überlagerung mehrerer parametrisierter Beiträge modelliert, die jeweils von Lern-Datensätzen mit gleicher oder ähnlicher Bewertung herrühren. Die Parameter dieser Beiträge werden dahingehend optimiert, dass die Abweichung der beobachteten Verteilung der Unsicherheiten von der Überlagerung minimiert wird. Auf diesem Weg werden die Beiträge ermittelt.

Dabei besteht Freiheit dahingehend, von welcher Art die Überlagerung ist. Die Überlagerung kann beispielsweise additiv sein. Die Überlagerung kann aber auch beispielsweise darin bestehen, dass zu jedem Wert der Unsicherheit der jeweils höchste Wert der verschiedenen Beiträge ausgewählt wird. Beispielsweise kann die Verteilung als Überlagerung eines Beitrags, der von zutreffend gelabelten Lern-Datensätzen ("clean labels") herrührt, und eines Beitrags, der von unzutreffend gelabelten Lern-Datensätzen ("noisy labels") herrührt, modelliert werden. Es kann aber auch beispielsweise ein weiterer Beitrag für Lern-Datensätze eingeführt werden, deren Labels mittelmäßig verlässlich sind.

Durch die Modellierung kann insbesondere eine Zusatzinformation dahingehend berücksichtigt werden, welche Funktionsvorschrift jeweils die Verteilung der einzelnen Beiträge charakterisiert. Nachdem die Parameter der Beiträge bestimmt sind und die Beiträge somit insgesamt festliegen, lassen sich die Beiträge beispielsweise nutzen, um konkrete Lern-Datensätze zu bewerten. In einer besonders vorteilhaften Ausgestaltung wird daher die Bewertung mindestens eines Lern-Datensatzes anhand einer lokalen Wahrscheinlichkeitsdichte, die mindestens ein Beitrag zur Überlagerung ausgibt, wenn ihm die Unsicherheit dieses Lern-Datensatzes als Eingabe zugeführt wird, und/oder anhand eines Verhältnisses solcher lokaler Wahrscheinlichkeitsdichten, ermittelt. Beispielsweise kann die Verteilung durch eine Überlagerung aus einem ersten Beitrag, der zutreffend gelabelte ("clean") Lern-Datensätze repräsentiert, und einem zweiten Beitrag, der unzutreffend gelabelte ("noisy") Lern-Datensätze repräsentiert, modelliert sein. Der erste Beitrag liefert bei Eingabe der Unsicherheit u dann eine Wahrscheinlichkeit $p_c(u)$ dafür, dass es sich um einen zutreffend gelabelten Lern-Datensatz handelt. Der zweite Beitrag liefert bei Eingabe der Unsicherheit u eine Wahrscheinlichkeit $p_n(u)$ dafür, dass es sich um einen unzutreffend gelabelten Lern-Datensatz handelt.

Weiterhin kann eine Chance (Odds Ratio) r dafür bestimmt werden, dass ein Lern-Datensatz unzutreffend im Vergleich zu zutreffend gelabelt ist. Dieses Odds Ratio r kann beispielsweise nach der Vorschrift

$$r = (p_n(u)/(1-p_n(u)) \, / \, (p_c(u)/(1-p_c(u))$$

ermittelt werden. Aus dem Odds Ratio r oder auch aus dem Verhältnis von $p_n(u)$ zu $p_c(u)$ kann nun beispielsweise bei Überschreiten eines bestimmten Werts entschieden werden, dass es sich bei dem Lern-Datensatz um einen unzutreffend gelabelten ("noisy") Lern-Datensatz handelt.

Ebenso kann alternativ oder auch in Kombination hierzu in die Bewertung mindestens eines Lern-Datensatzes eingehen, welchem Beitrag der Lern-Datensatz beim Optimieren der Parameter der Beiträge zugeordnet wird. Bestimmte Algorithmen zum Optimieren der Parameter, wie etwa der Expectation Maximization-Algorithmus, geben unmittelbar zurück, welche Lern-Datensätze zum Fitten der Beiträge an die Verteilung verwendet wurden. In dem oben erläuterten Beispiel kann der Anteil der Lern-Datensätze, die zum Fitten des zweiten, die unzutreffend gelabelten Lern-Datensätze repräsentierenden, Beitrags an die Verteilung verwendet wurden, beispielsweise als Abschätzung für den Anteil der unzutreffend gelabelten Lern-Datensätze gewertet werden.

Ebenso kann beispielsweise während des Vortrainings, etwa in jeder n-ten Epoche, beobachtet werden, ob ein Lern-Datensatz zum Fitten des ersten, die zutreffend gelabelten Lern-Datensätze repräsentierenden, Beitrags oder zum Fitten des zweiten, die unzutreffend gelabelten Lern-Datensätze repräsentierenden, Beitrags verwendet wurde. Diese Zuordnung kann von Epoche zu Epoche wechseln. Am Ende des Vortrainings kann der Lern-Datensatz beispielsweise als unzutreffend gelabelt eingestuft werden, wenn er in der überwiegenden Anzahl der untersuchten Epochen als unzutreffend gelabelt eingestuft wurde.

Es lassen sich an den Beiträgen jedoch auch weitere Informationen ablesen, die die Gesamtheit der in der Verteilung analysierten Lern-Datensätze charakterisieren. So wird in einer besonders vorteilhaften Ausgestaltung anhand der Abweichung der Verteilung von der Überlagerung mindestens ermittelt, ob zu der Verteilung im Wesentlichen nur Lern-Datensätze mit gleichen oder ähnlichen Bewertungen beigetragen haben. Beispielsweise kann auf diese Weise getestet werden, ob im Wesentlichen nur zutreffend gelabelte Lern-Datensätze vorhanden sind oder ob es noch unzutreffend gelabelte Lern-Datensätze gibt, bezüglich derer noch eine oder mehrere der beschriebenen selektiven Maßnahmen ergriffen werden können. Das heißt, dass dieser Test beispielsweise als Abbruchkriterium für derartige selektive Maßnahmen verwendet werden kann.

Wird beispielsweise für die Überlagerung ein Ansatz mit zwei parametrisierten Beiträgen gemacht, dann wird abhängig von dem konkret für die Optimierung der Parameter verwendeten Algorithmus mehr oder weniger erzwungen, dass die Überlagerung zwei Beiträge enthält. Sind nun aber tatsächlich in der Verteilung gar keine zwei Beiträge vorhanden, weil beispielsweise im Wesentlichen alle Lern-Datensätze zutreffend gelabelt sind, dann ist die Abweichung zwischen der Überlagerung und der Verteilung auch nach dem Abschluss der Optimierung vergleichsweise groß. Die tatsächliche Verteilung der Unsicherheiten zentriert sich dann um einen vergleichsweise niedrigen Wert, während die Überlagerung ein zweites solches Zentrum sucht. Es ist dann nicht mehr sinnvoll, weitere Lern-Datensätze durch Aktualisierung der Lern-Ausgangsgrößenwerte "nachzulabeln" oder sie in der Kostenfunktion für das Training des trainierbaren Moduls unterzugewichten.

Es kann beispielsweise mit statistischen Tests ermittelt werden, ob zur Verteilung im Wesentlichen nur Lern-Datensätze mit gleichen oder ähnlichen Bewertungen beigetragen haben. Derartige Tests überprüfen, ob die zu Grunde liegenden Daten einer Stichprobe einer vorgegebenen Verteilung folgen bzw. ob die ermittelte Überlagerung im Einklang mit den Lern-Datensätzen steht. Beispiele hierfür sind der Shapiro-Wilk-Test (für die Normalverteilung) und der Kolmogorow-Smirnow-Test. Alternativ oder auch in Kombination hierzu können beispielsweise auch visuelle Auftragungen der Abweichung zwischen der Verteilung und der Überlagerung, wie beispielsweise ein Q-Q-Plot, in metrische Größen übersetzt werden. Beim Q-Q-Plot kann hierfür beispielsweise die mittlere Abweichung von der Diagonalen verwendet werden.

In einer weiteren besonders vorteilhaften Ausgestaltung werden verschiedene Beiträge zu der Überlagerung mit gleichen parametrisierten Funktionen, jedoch voneinander unabhängigen Parametern, modelliert. Es ist dann keiner der Beiträge gegenüber dem anderen ausgezeichnet, so dass es sich allein nach der sich letztendlich ergebenden Statistik über alle Lern-Datensätze richtet, welcher Lern-Datensatz welchem Beitrag zugeordnet wird.

Beispiele für parametrisierte Funktionen, mit denen die Beiträge jeweils modelliert werden können, sind statistische Verteilungen, insbesondere Verteilungen aus der Exponentialfamilie, wie insbesondere die Normalverteilung, die Exponentialverteilung, die Gamma-Verteilung, die Chi-Quadrat-Verteilung, die Beta-Verteilung, die Exponential-Weibull-Verteilung und die Dirichlet-Verteilung. Besonders vorteilhaft ist es, wenn die Funktionen das Intervall [0, 1] oder (0, 1) als Träger (Nichtnullstellenmenge) hat, da einige Möglichkeiten für die Berechnung der Unsicherheit, wie etwa ein Mittelwert über Softmax-Scores, Werte im Intervall (0, 1) liefern. Die Beta-Verteilung ist ein Beispiel für eine Funktion mit einem derartigen Träger.

Die Parameter der Beiträge können beispielsweise nach einer Likelihood-Methode und/oder nach einer Bayesschen Methode, insbesondere mit dem Expectation-Maximization-Algorithmus, mit dem Expectation/Conditional-Maximization-Algorithmus, mit dem Expectation-Conjugate-Gradient-Algorithmus, mit dem Riemann-Batch-Algorithmus, mit einem Newton-basierten Verfahren (etwa Newton-Ralphson), mit einem Markov Chain Monte Carlo-basierten Verfahren (etwa Gibbs Sampler oder Metropolis-Hasting-Algorithmus), und/oder mit einem stochastischen Gradienten-Algorithmus, optimiert werden. Hierbei ist der Expectation Maximization-Algorithmus besonders geeignet. Wie zuvor erläutert, liefert dieser Algorithmus unmittelbar eine Information, welche Lern-Datensätze zum Fitten welches Beitrags an die Verteilung herangezogen wurden. Der Riemann-Batch-Algorithmus ist in arXiv:1706.03267 näher beschrieben.

In einer weiteren besonders vorteilhaften Ausgestaltung wird aus den modellierten Beiträgen die Kullback-Leibler-Divergenz, der Hellingerabstand, der Lévy-Abstand, die Lévy-Prochorow-Metrik, die Wasserstein-Metrik, die Jensen-Shannon-Divergenz, und/oder ein anderes skalares Maß dafür, inwieweit diese Beiträge sich voneinander unterscheiden, ermittelt. Auf diese Weise lässt sich beurteilen, wie scharf die verschiedenen Beiträge überhaupt voneinander getrennt sind.

Weiterhin lässt sich das skalare Maß dafür nutzen, die Dauer des Vortrainings der Abwandlungen zu optimieren. Daher wird in einer weiteren besonders vorteilhaften Ausgestaltung eine Abhängigkeit des skalaren Maßes von einer Anzahl von Epochen, und/oder von einer Anzahl von Trainingsschritten, des Vortrainings der Abwandlungen ermittelt.

Dabei kann beispielsweise eine Tendenz bestehen, dass sich eine Aufteilung der Verteilung der Unsicherheiten in mehrere Beiträge zwar im Rahmen des Vortrainings zunächst herausbildet, jedoch bei weiterem Fortschritt des Vortrainings wieder teilweise eingeebnet wird. Wie zuvor erläutert, führen unzutreffend gelabelte Lern-Datensätze zu Widersprüchen im Vortraining. Das Vortraining kann anstreben, diese Widersprüche mit einem "Kompromiss" aufzulösen. Der Unterschied zwischen zutreffend gelabelten und unzutreffend gelabelten Lern-Datensätzen ist zu einem Zeitpunkt, zu dem dieser Prozess noch nicht eingesetzt hat, am deutlichsten.

Daher wird in einer weiteren besonders vorteilhaften Ausgestaltung eine Anzahl von Epochen, und/oder eine Anzahl von Trainingsschritten, bei der das skalare Maß auf eine maximale Unterscheidung der Beiträge zur Überlagerung hinweist, für die weitere Ermittlung von Unsicherheiten von Lern-Datensätzen herangezogen.

Die Erfindung bezieht sich auch auf ein weiteres Verfahren, das die Wirkkette des Trainings mit dem Betrieb des damit trainierten trainierbaren Moduls fortsetzt. Bei diesem Verfahren wird zunächst ein trainierbares Modul, welches eine oder mehrere Eingangsgrößen in eine oder mehrere Ausgangsgrößen übersetzt, mit dem zuvor beschriebenen Verfahren trainiert. Anschließend wird das trainierbare Modul betrieben, indem ihm Eingangsgrößenwerte zugeführt werden.

Die Eingangsgrößenwerte werden durch einen physikalischen Messprozess, und/oder durch eine teilweise oder vollständige Simulation eines solchen Messprozesses, und/oder durch eine teilweise oder vollständige Simulation eines mit einem solchen Messprozess beobachtbaren technischen Systems, erhalten.

Das trainierbare Modul übersetzt die Eingangsgrößenwerte in Ausgangsgrößenwerte. Abhängig von diesen Ausgangsgrößenwerten wird ein Fahrzeug, und/oder ein Klassifikationssystem, und/oder ein System zur Qualitätskontrolle von in Serie gefertigten Produkten, und/oder ein System zur medizinischen Bildgebung, mit einem Ansteuersignal angesteuert.

Beispielsweise kann das trainierbare Modul eine semantische Segmentierung von Bildern aus dem Umfeld des Fahrzeugs liefern. Diese semantische Segmentierung klassifiziert die Bildpixel nach den Typen von Objekten, zu denen sie gehören. Auf der Basis dieser semantischen Segmentierung kann das Fahrzeug dann so angesteuert werden, dass es sich nur innerhalb frei befahrbarer Fläche bewegt und Kollisionen mit anderen Objekten, wie baulichen Fahrbahnbegrenzungen oder anderen Verkehrsteilnehmern, vermeidet.

Beispielsweise kann das trainierbare Modul im Rahmen einer Qualitätskontrolle Exemplare eines bestimmten Produkts auf der Basis physikalischer Messdaten in zwei oder mehr Qualitätsklassen einteilen. Abhängig von der Qualitätsklasse kann dann ein bestimmtes Exemplar beispielsweise markiert werden, oder es kann eine Sortiereinrichtung dahingehend angesteuert werden, dass es von anderen Exemplaren mit anderen Qualitätsklassen abgesondert wird.

Beispielsweise kann das trainierbare Modul im Rahmen der medizinischen Bildgebung klassifizieren, ob ein aufgenommenes Bild auf ein bestimmtes Krankheitsbild hindeutet oder nicht und welcher Ausprägungsgrad der Krankheit gegebenenfalls vorliegt. Abhängig vom Ergebnis dieser Klassifikation kann beispielsweise der physikalische Prozess der Bildaufnahme dahingehend angepasst werden, dass auf der Basis weiterer aufgenommener Bilder eine noch klarere Unterscheidung ermöglicht wird, ob das entsprechende Krankheitsbild vorliegt. So kann beispielsweise der Fokus oder die Beleuchtung eines kamerabasierten Systems zur Bildgebung angepasst werden.

Gerade im Bereich der medizinischen Bildgebung ist das Labeln, also die Zuweisung zutreffender Lern-Ausgangsgrößenwerte zu gegebenen Lern-Eingangsgrößenwerten, besonders fehleranfällig, weil es vielfach auf Erfahrungswissen menschlicher Experten bei der Beurteilung von Bildern beruht. Dieses Erfahrungswissen ist nur schwer, wenn überhaupt, in quantitative Kriterien für die Beurteilung der Bilder zu fassen.

Die Verfahren können insbesondere ganz oder teilweise in Software implementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

Ausführungsbeispiele

Es zeigt:

Figur 1 Ausführungsbeispiel des Verfahrens 100 zum Trainieren;
Figur 2 Ausführungsbeispiel des Verfahrens 200 mit vollständiger Wirkkette bis zur Ansteuerung eines technischen Systems;
Figur 3 Beispielhafte Modellierung einer Verteilung 3 von Unsicherheiten 2a durch eine Überlagerung 4 aus zwei Beiträgen 41, 42;
Figur 4 Versagen der Modellierung in dem Fall, dass im Wesentlichen alle Lern-Datensätze 2 zutreffend gelabelt sind.

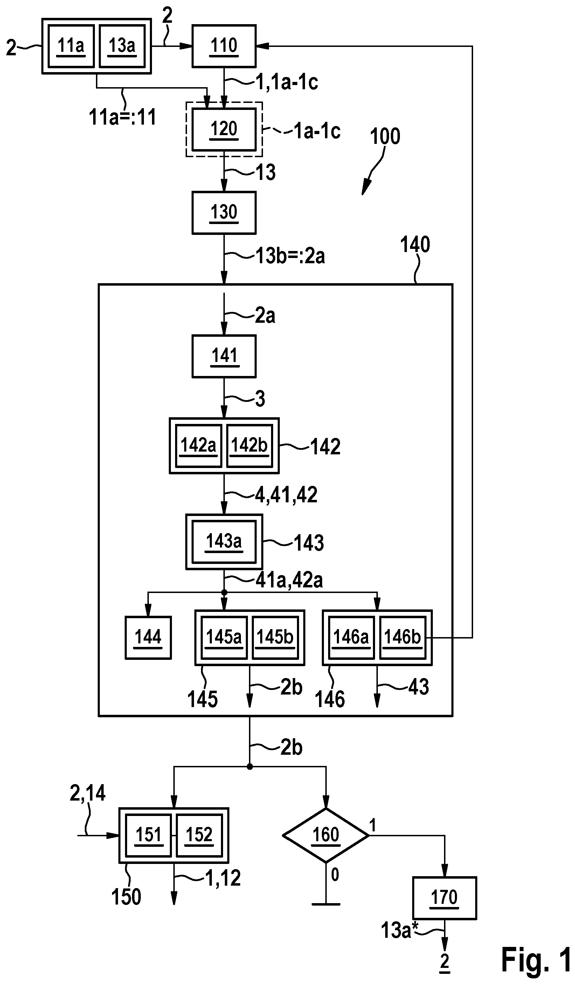

Figur 1 zeigt ein Ausführungsbeispiel des Verfahrens 100 zum Trainieren eines trainierbaren Moduls 1. In Schritt 110 wird eine Mehrzahl von Abwandlungen 1a-1c des trainierbaren Moduls 1 mindestens mit einer Teilmenge der vorhandenen Lern-Datensätze 2 vortrainiert. Jeder Lern-Datensatz 2 enthält Lern-Eingangsgrößenwerte 11a und zugehörige Lern-Ausgangsgrößenwerte 13a.

In Schritt 120 werden Lern-Eingangsgrößenwerte 11a aus Lern-Datensätzen 2 allen Abwandlungen 1a-1c als Eingangsgrößen 11 zugeführt. Jede Abwandlung 1a-1c erzeugt hieraus einen eigenen Ausgangsgrößenwert 13. In Schritt 130 wird aus den Abweichungen dieser Ausgangsgrößenwerte 13 voneinander ein Maß für die Unsicherheit 13b dieser Ausgangsgrößenwerte ermittelt. Dieses Maß für die Unsicherheit 13b wird dem Lern-Datensatz 2, dem die Lern-Eingangsgrößenwerte 11a entnommen wurden, als Maß für dessen Unsicherheit 2a zugeordnet.

Aus dieser Unsicherheit 2a wird in Schritt 140 eine Bewertung 2b des Lern-Datensatzes 2 ermittelt. Diese Bewertung 2b ist ein Maß dafür, inwieweit in dem Lern-Datensatz 2 die Zuordnung der Lern-Ausgangsgrößenwerte 13a zu den Lern-Eingangsgrößenwerten 11a, also das Labelling des Lern-Datensatzes 2, zutreffend ist. Innerhalb des Kastens 140 ist beispielhaft aufgeschlüsselt, wie die Bewertung 2b ermittelt werden kann.

Beispielsweise kann gemäß Block 141 anhand einer Vielzahl von Lern-Datensätzen 2 eine Verteilung 3 der Unsicherheiten 2a ermittelt und diese Verteilung 3 anschließend weiter ausgewertet werden.

Die Verteilung 3 kann beispielsweise gemäß Block 142 als Überlagerung mehrerer parametrisierter Beiträge 41, 42 modelliert werden. Hierbei können beispielsweise gemäß Block 142a verschiedene Beiträge 41, 42 mit gleichen parametrisierten Funktionen, jedoch voneinander unabhängigen Parametern 41a, 42a modelliert werden. Gemäß Block 142b können beispielsweise statistische Verteilungen, insbesondere Verteilungen aus der Exponentialfamilie, wie etwa eine Normalverteilung, eine Exponentialverteilung, eine Gamma-Verteilung, eine Chi-Quadrat-Verteilung, eine Beta-Verteilung, eine Exponential-Weibull-Verteilung und/oder eine Dirichlet-Verteilung, zum Einsatz kommen.

Die Parameter 41a, 42a der Beiträge können gemäß Block 143 beispielsweise dahingehend optimiert werden, dass die Abweichung der beobachteten Verteilung 3 von der ermittelten Überlagerung 4 minimiert wird. Für diese Optimierung kann gemäß Block 143a beispielsweise eine Likelihood-Methode und/oder eine Bayessche Methode, wie etwa ein Expectation-Maximization-Algorithmus, ein Expectation/Conditional-Maximization-Algorithmus, ein Expectation-Conjugate-Gradient-Algorithmus, ein Riemann-Batch-Algorithmus, eine Newton-basiertes Verfahren (etwa Newton-Ralphson), ein Markov Chain Monte Carlo-basiertes Verfahren (etwa Gibbs Sampler oder Metropolis-Hasting-Algorithmus) und/oder ein stochastischer Gradienten-Algorithmus, zum Einsatz kommen.

Die Abweichung der Verteilung 3 von der Überlagerung 4 kann gemäß Block 144 bereits die wichtige Information liefern, ob zu der Verteilung 3 im Wesentlichen nur Lern-Datensätze 2 mit gleichen oder ähnlichen Bewertungen 2b beigetragen haben. Wenn beispielsweise mit den Beiträgen 41 und 42 zur Überlagerung 4 zutreffend gelabelte Lern-Datensätze 2 von unzutreffend gelabelten Lern-Datensätzen 2 unterschieden werden sollen, dann können die nach der Identifizierung der unzutreffend gelabelten Datensätze 2 ergriffenen Maßnahmen irgendwann dazu führen, dass es im Wesentlichen nur noch zutreffend gelabelte Lern-Datensätze 2 gibt. Dies kann gemäß Block 144 erkannt werden. Hieraus lässt sich beispielsweise eine Abbruchbedingung für die besagten Maßnahmen herleiten.

Allgemein kann aus der Verteilung 3 gemäß Block 145 die gewünschte Bewertung 2b ermittelt werden. Gemäß Block 145a können hierfür die Beiträge 41, 42 zur Überlagerung 4, mit der die Verteilung 3 modelliert wird, genutzt werden. Beispielsweise kann ein solcher Beitrag 41, 42 einer Unsicherheit 2a eines Lern-Datensatzes 2 eine lokale Wahrscheinlichkeitsdichte zuordnen, mit der dieser Lern-Datensatz 2 zutreffend oder unzutreffend gelabelt ist. Aus mehreren lokalen Wahrscheinlichkeitsdichten lässt sich ein entsprechendes Odds-Ratio bilden. Alternativ oder auch in Kombination hierzu kann gemäß Block 145b beobachtet werden, welchem Beitrag 41, 42 ein Lern-Datensatz 2 beim Optimieren 143 der Parameter 41a, 42a der Beiträge 41, 42 zugeordnet wird. Wie zuvor erläutert, liefern manche Algorithmen zur Optimierung unmittelbar eine Information, auf welche Lern-Datensätze 2 sie sich jeweils stützen.

Gemäß Block 146 kann aus den durch die Parameter 41a, 42a festgelegten Beiträgen 41, 42 ein skalares Maß 43 dafür, inwieweit sich diese Beiträge 41, 42 voneinander unterscheiden, ermittelt werden. Dieses skalare Maß 43 kann beispielsweise die Kullback-Leibler-Divergenz sein. Insbesondere kann gemäß Block 146a die Abhängigkeit dieses skalaren Maßes 43 von einer Anzahl von Epochen, und/oder von einer Anzahl von Trainingsschritten, des Vortrainings 110 der Abwandlungen 1a-1c ermittelt werden. Eine mögliche Nutzanwendung ist gemäß Block 146b, die beim Vortraining 110 verwendete Anzahl von Epochen und/oder Trainingsschritten gezielt so zu wählen, dass das skalare Maß 43 maximal wird und sich somit die Beiträge 41, 42 bestmöglich voneinander unterscheiden lassen.

In Figur 1 sind weiterhin beispielhafte Nutzanwendungen der in Schritt 140 ermittelten Bewertung 2b von Lern-Datensätzen 2 angegeben.

In Schritt 150 kann das letztendlich benötigte trainierbare Modul 1 trainiert werden, indem anpassbare Parameter 12, die das Verhalten dieses trainierbaren Moduls 1 charakterisieren, optimiert werden, mit dem Ziel, den Wert einer Kostenfunktion 14 zu verbessern. Die Kostenfunktion 14 misst gemäß Block 151, inwieweit das trainierbare Modul 1 die in Lern-Datensätzen enthaltenen Lern-Eingangsgrößenwerte 11a auf die zugehörigen Lern-Ausgangsgrößenwerte 13a abbildet. Dabei hängt gemäß Block 152 die Gewichtung mindestens eines Lern-Datensatzes 2 in der Kostenfunktion 2 von seiner Bewertung 2b ab.

In Schritt 160 kann alternativ oder auch in Kombination hierzu geprüft werden, ob die Bewertung 2b eines Lern-Datensatzes 2 ein vorgegebenes Kriterium erfüllt. Das Kriterium kann beispielsweise darin bestehen, dass die Bewertung 2b einen vorgegebenen Schwellwert über- oder unterschreitet, und/oder dass die Bewertung 2b den Lern-Datensatz 2 als unzutreffend gelabelt klassifiziert. Ist dies der Fall (Wahrheitswert 1), kann in Schritt 170 eine Aktualisierung 13a* des in dem Lern-Datensatz 2 enthaltenen Lern-Ausgangsgrößenwerts 13a angefordert werden.

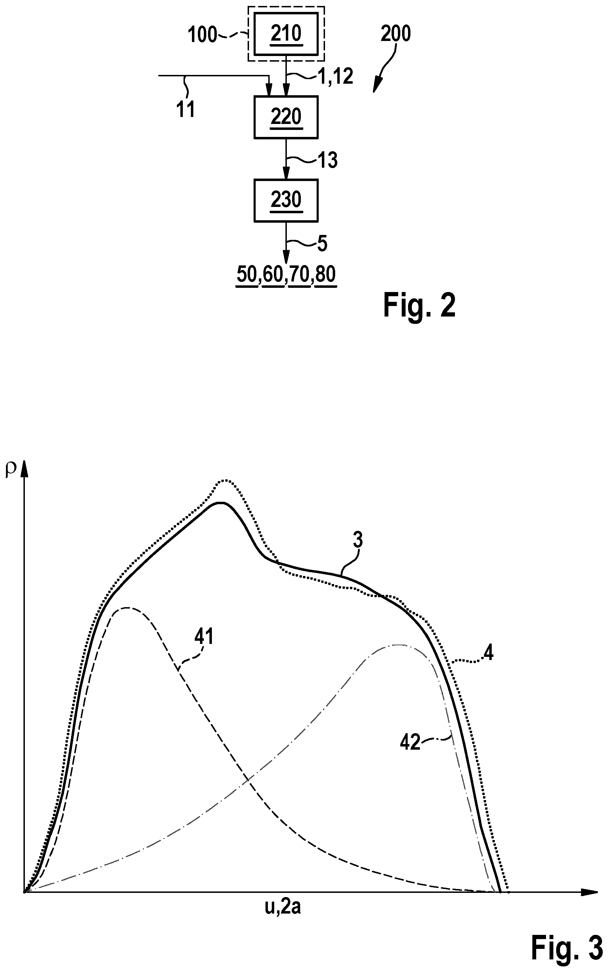

Figur 2 zeigt ein Ausführungsbeispiel des Verfahrens 200. In Schritt 210 dieses Verfahrens 200 wird ein trainierbares Modul 1 mit dem zuvor beschriebenen Verfahren 100 trainiert. Das solchermaßen trainierte Modul wird in Schritt 220 betrieben, indem ihm Eingangsgrößenwerte 11 mit physikalisch aufgenommenen und/oder simulierten Messdaten, die sich auf ein technisches System beziehen, zugeführt werden. Aus dem vom trainierbaren Modul 1 daraufhin gelieferten Ausgangsgrößenwerten 13 wird in Schritt 230 ein Ansteuersignal 5 gebildet. Ein Fahrzeug 50, und/oder ein Klassifikationssystem 60, und/oder ein System 70 zur Qualitätskontrolle von in Serie gefertigten Produkten, und/oder ein System 80 zur medizinischen Bildgebung, wird mit diesem Ansteuersignal 5 angesteuert.

Figur 3 zeigt beispielhaft, wie eine Verteilung 3 von Unsicherheiten 2a, u durch eine Überlagerung 4 aus zwei Beiträgen 41, 42 modelliert werden kann. Aufgetragen ist zu jedem Wert der Unsicherheit 2a, u jeweils der Wert einer lokalen Wahrscheinlichkeitsdichte ρ, die sich gemäß dem jeweiligen Beitrag 41, 42 als Funktion der jeweiligen Unsicherheit 2a ergibt. Die Überlagerung 4 wird in diesem Beispiel als gewichtete Addition aus allen Unsicherheiten 2a gebildet und kann in die Beiträge 41, 42 zerlegt dargestellt werden. Es kann jedoch auch beispielsweise zu jedem Wert der Unsicherheit 2a, u jeweils der höhere Funktionswert der beiden Beiträge 41, 42 ausgewählt werden. In dem in Figur 3 gezeigten Beispiel rührt der erste Beitrag 41, der bei niedrigeren Unsicherheiten 2a, u groß ist, von zutreffend gelabelten Lern-Datensätzen 2 her. Der zweite Beitrag 42, der bei höheren Unsicherheiten 2a, u groß ist, rührt von unzutreffend gelabelten Lern-Datensätzen 2 her.

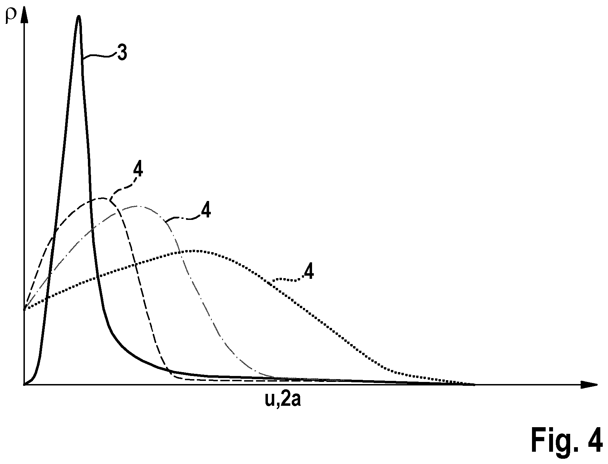

Figur 4 zeigt beispielhaft, wie die in Figur 3 veranschaulichte Modellierung fehlschlagen kann, wenn die Lern-Datensätze 2 alle zutreffend gelabelt sind. Die Verteilung 3 der Unsicherheiten 2a, u ist dann um einen niedrigen Wert zentriert. Die drei beispielhaft eingezeichneten Modellierungen mit der Überlagerung 4 gehen aber jeweils nach wie vor davon aus, dass es zwei Beiträge 41, 42 gibt, und versuchen, diesen Ansatz nach Maßgabe eines Fehlermaßes (etwa kleinste Fehlerquadratsumme) irgendwie mit der Verteilung 3 zur Deckung zu bringen. Wie Figur 4 zeigt, ist die Abweichung groß. Hieraus lässt sich ein deutliches Signal dafür ableiten, dass alle Lern-Datensätze 2 zutreffend gelabelt sind.

## Patentansprüche

**1.** Computerimplementiertes Verfahren (100) zum Trainieren eines trainierbaren Bildklassifikators (1), welcher eine oder mehrere Eingangsgrößen (11) in eine oder mehrere Ausgangsgrößen (13) übersetzt, mittels Lern-Datensätzen (2), die Lern-Eingangsgrößenwerte (11a) und zugehörige Lern-Ausgangsgrößenwerte (13a) enthalten,

> wobei jede Eingangsgröße die Pixelwerte eines Bildes kodiert und jede Ausgangsgröße eine Klasse,
> wobei jeder Lern-Eingangsgrößenwert die Pixelwerte eines Bildes kodiert und der zugehörige Lern-Ausgangsgrößenwert eine diesem Bild zugewiesene Klasse,
> wobei mindestens die Lern-Eingangsgrößenwerte (11a) durch einen physikalischen Messprozess, und/oder durch eine teilweise oder vollständige Simulation eines solchen Messprozesses, und/oder durch eine teilweise oder vollständige Simulation eines mit einem solchen Messprozess beobachtbaren technischen Systems, erhalten wurden, mit den Schritten:

> > • eine Mehrzahl von Abwandlungen (1a-1c) des trainierbaren Bildklassifikators (1), die sich so weit voneinander unterscheiden, dass sie bei fortschreitendem Lernen nicht deckungsgleich ineinander überführt werden, wird jeweils mindestens mit einer Teilmenge der Lern-Datensätze (2) vortrainiert (110);
> > • Lern-Eingangsgrößenwerte (11a) mindestens eines Lern-Datensatzes (2) werden allen Abwandlungen (1a-1c) als Eingangsgrößen (11) zugeführt (120);

• aus der Abweichung der Ausgangsgrößenwerte (13), in die die Abwandlungen (1a-1c) die Lern-Eingangsgrößenwerte (11a) jeweils übersetzen, voneinander wird ein Maß für die Unsicherheit (13b) dieser Ausgangsgrößenwerte (13) ermittelt und dem Lern-Datensatz (2) als Maß für dessen Unsicherheit (2a) zugeordnet (130);

• anhand der Unsicherheit (2a) wird eine Bewertung (2b) des Lern-Datensatzes (2) ermittelt (140), die ein Maß dafür ist, inwieweit die Zuordnung der Lern-Ausgangsgrößenwerte (13a) zu den Lern-Eingangsgrößenwerten (11a) in dem Lern-Datensatz (2) zutreffend ist;

> wobei anhand einer Vielzahl von Lern-Datensätzen (2) eine Verteilung (3) der Unsicherheiten (2a) ermittelt wird (141) und wobei die Bewertung (2b) anhand dieser Verteilung (3) ermittelt wird (145);
>
> wobei die Verteilung (3) als Überlagerung (4) mehrerer parametrisierter Beiträge (41, 42) modelliert wird (142), die jeweils von Lern-Datensätzen (2) mit gleicher oder ähnlicher Bewertung (2b) herrühren, und wobei die Parameter (41a, 42a) dieser Beiträge (41, 42) dahingehend optimiert werden (143), dass die Abweichung der Verteilung (3) von der modellierten Überlagerung (4) minimiert wird, um so die Beiträge (41, 42) zu ermitteln,
>
> wobei anpassbare Parameter (12), die das Verhalten des trainierbaren Bildklassifikators (1) charakterisieren, optimiert werden (150), mit dem Ziel, den Wert einer Kostenfunktion (14) zu verbessern, wobei diese Kostenfunktion (14) misst (151), inwieweit der trainierbare Bildklassifikator (1) die in Lern-Datensätzen (2) enthaltenen Lern-Eingangsgrößenwerte (11a) auf die zugehörigen Lern-Ausgangsgrößenwerte (13a) abbildet, wobei eine Gewichtung mindestens eines Lern-Datensatzes (2) in der Kostenfunktion (14) von seiner Bewertung (2b) abhängt (152).

2. Verfahren (100) nach Anspruch 1, wobei in Antwort darauf, dass die Bewertung (2b) eines Lern-Datensatzes (2) ein vorgegebenes Kriterium erfüllt, dieser Lern-Datensatz (2) nicht mehr in der Kostenfunktion (14) berücksichtigt wird.

3. Verfahren (100) nach einem der Ansprüche 1 oder 2, wobei in Antwort darauf, dass die Bewertung (2b) eines Lern-Datensatzes (2) ein vorgegebenes Kriterium erfüllt (160), eine Aktualisierung (13a*) mindestens eines in diesem Lern-Datensatz (2) enthaltenen Lern-Ausgangsgrößenwerts (13a) angefordert wird (170).

4. Verfahren (100) nach einem der Ansprüche 1 bis 3, wobei anhand der Abweichung der Verteilung (3) von der Überlagerung (4) mindestens ermittelt wird (144), ob zu der Verteilung (3) im Wesentlichen nur Lern-Datensätze (2) mit gleichen oder ähnlichen Bewertungen (2b) beigetragen haben.

5. Verfahren (100) nach einem der vorhergehenden Ansprüche, wobei verschiedene Beiträge (41, 42) zu der Überlagerung (4) mit gleichen parametrisierten Funktionen, jedoch voneinander unabhängigen Parametern (41a, 42a), modelliert werden (142a).

6. Verfahren (100) nach einem der vorhergehenden Ansprüche, wobei mindestens ein parametrisierter Beitrag (41, 42) als statistische Verteilung, insbesondere als Verteilung aus der Exponentialfamilie, wie etwa als Normalverteilung, als Exponentialverteilung, als Gamma-Verteilung, als Chi-Quadrat-Verteilung, als Beta-Verteilung, als Exponential-Weibull-Verteilung, und/oder als Dirichlet-Verteilung, modelliert wird (142b).

7. Verfahren (100) nach einem der vorhergehenden Ansprüche, wobei die Parameter (41a, 42a) der Beiträge (41, 42) nach einer Likelihood-Methode und/oder nach einer Bayesschen Methode, wie etwa mit dem Expectation-Maximization-Algorithmus, mit dem Expectation/Conditional-Maximization-Algorithmus, mit dem Expectation-Conjugate-Gradient-Algorithmus, mit dem Riemann-Batch-Algorithmus, mit einem Newton-basierten Verfahren, mit einem Markov Chain Monte Carlo-basierten Verfahren, und/oder mit einem stochastischen Gradienten-Algorithmus, optimiert werden (143a).

8. Verfahren (100) nach einem der vorhergehenden Ansprüche, wobei die Bewertung (2b) mindestens eines Lern-Datensatzes (2) anhand einer lokalen Wahrscheinlichkeitsdichte, die mindestens ein Beitrag (41, 42) zur Überlagerung (4) ausgibt, wenn ihm die Unsicherheit (2a) dieses Lern-Datensatzes (2) als Eingabe zugeführt wird, und/oder anhand eines Verhältnisses solcher lokaler Wahrscheinlichkeitsdichten, ermittelt wird (145a).

9. Verfahren (100) nach einem der vorhergehenden Ansprüche, wobei in die Bewertung (2b) mindestens eines Lern-Datensatzes (2) eingeht (145b), welchem Beitrag (41, 42) der Lern-Datensatz (2) beim Optimieren (143) der Parameter (41a, 42a) der Beiträge (41, 42) zugeordnet wird.

10. Verfahren (100) nach einem der vorhergehenden Ansprüche, wobei aus den Beiträgen (41, 42) die Kullback-Leibler-Divergenz, der Hellingerabstand, der Lévy-Abstand, die Lévy-Prochorow-Metrik, die Wasserstein-Metrik, die Jensen-Shannon-Divergenz, und/oder ein anderes skalares Maß (43) dafür, inwieweit diese Beiträge (41, 42) sich voneinander unterscheiden, ermittelt wird (146).

11. Verfahren (100) nach Anspruch 10, wobei eine Abhängigkeit des skalaren Maßes (43) von einer Anzahl von Epochen, und/oder von einer Anzahl von Trainingsschritten, des Vortrainings (110) der Abwandlungen (1a-1c) ermittelt wird (146a), wobei eine Anzahl von Epochen, und/oder eine Anzahl von Trainingsschritten, bei der das skalare Maß (43) auf eine maximale Unterscheidung der Beiträge (41, 42) zur Überlagerung (4) hinweist, für die weitere Ermittlung von Unsicherheiten (2a) von Lern-Datensätzen (2b) herangezogen wird (146b).

12. Computerimplementiertes Verfahren (200) mit den Schritten:

> • ein trainierbarer Bildklassifikator (1) für das zumindest teilautomatisierte Fahren, welcher eine oder mehrere Eingangsgrößen (11) in eine oder mehrere Ausgangsgrößen (13) übersetzt, wird mit dem Verfahren (100) nach einem der Ansprüche 1 bis 11 trainiert (210);
> • der trainierbare Bildklassifikator (1) wird betrieben (220), indem ihm Eingangsgrößenwerte (11) zugeführt werden, wobei diese Eingangsgrößenwerte (11) durch einen physikalischen Messprozess, und/oder durch eine teilweise oder vollständige Simulation eines solchen Messprozesses, und/oder durch eine teilweise oder vollständige Simulation eines mit einem solchen Messprozess beobachtbaren technischen Systems, erhalten wurden;
> • abhängig von den vom trainierbaren Bildklassifikator (1) gelieferten Ausgangsgrößenwerten (13) wird ein Fahrzeug (50), und/oder ein Klassifikationssystem (60), und/oder ein System zur Qualitätskontrolle von in Serie gefertigten Produkten (70), und/oder ein System zur medizinischen Bildgebung (80), mit einem Ansteuersignal (5) angesteuert (230).

13. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 12 auszuführen.

14. Maschinenlesbarer Datenträger mit dem Computerprogramm nach Anspruch 13.

15. Computer, ausgerüstet mit dem Computerprogramm nach Anspruch 13, und/oder mit dem maschinenlesbaren Datenträger nach Anspruch 14.

**Claims**

1. Computer-implemented method (100) for training a trainable image classifier (1), which translates one or more input variables (11) into one or more output variables (13), by means of learning data sets (2) containing learning input variable values (11a) and associated learning output variable values (13a),

> wherein each input variable codes the pixel values of an image and each output variable codes a class,
> wherein each learning input variable value codes the pixel values of an image and the associated learning output variable value codes a class assigned to that image,
> wherein at least the learning input variable values (11a) were obtained by means of a physical measurement process, and/or by means of a partial or complete simulation of such a measurement process, and/or by means of a partial or complete simulation of a technical system that can be observed with such a measurement process, having the following steps:
>
> > • a plurality of variations (1a-1c) of the trainable image classifier (1), which differ from each other to such an extent that they are not converted congruently into each other in the course of progressive learning, are each pretrained (110) at least with a subset of the learning data sets (2);
> > • learning input variable values (11a) of at least one learning data set (2) are supplied (120) to all variations (1a-1c) as input variables (11);
> > • the deviation of the output variable values (13), into which the variations (1a-1c) respectively translate the learning input variable values (11a), from each other is used to determine a measure of the uncertainty (13b) of these output variable values (13) and this measure is assigned (130) to the learning data set (2) as a measure of its uncertainty (2a);
> > • the uncertainty (2a) is taken as a basis for determining (140) an assessment (2b) of the learning data set (2) that is a measure of the extent to which the assignment of the learning output variable values (13a) to the learning input variable values (11a) in the learning data set (2) is correct;

wherein a distribution (3) of the uncertainties (2a) is determined (141) on the basis of a multiplicity of learning data sets (2), and wherein the assessment (2b) is determined (145) on the basis of this distribution (3); wherein the distribution (3) is modelled (142) as a superposition (4) of a plurality of parameterized contributions (41, 42) each deriving from learning data sets (2) with the same or a similar assessment (2b), and wherein the parameters (41a, 42a) of these contributions (41, 42) are optimized (143) such that the deviation of the distribution (3) from the modelled superposition (4) is minimized in order to thus determine the contributions (41, 42), wherein customizable parameters (12), which characterize the behaviour of the trainable image classifier (1), are optimized (150), with the aim of improving the value of a cost function (14), this cost function (14) measuring (151) the extent to which the trainable image classifier (1) maps the learning input variable values (11a) contained in learning data sets (2) to the associated learning output variable values (13a), wherein a weighting of at least one learning data set (2) in the cost function (14) depends (152) on its assessment (2b).

2. Method (100) according to Claim 1, wherein, in response to the fact that the assessment (2b) of a learning data set (2) satisfies a predefined criterion, this learning data set (2) is no longer taken into account in the cost function (14).

3. Method (100) according to either of Claims 1 and 2, wherein, in response to the fact that the assessment (2b) of a learning data set (2) satisfies (160) a predefined criterion, an update (13a*) of at least one learning output variable value (13a) contained in this learning data set (2) is requested (170).

4. Method (100) according to one of Claims 1 to 3, wherein, on the basis of the deviation of the distribution (3) from the superposition (4), it is at least determined (144) whether substantially only learning data sets (2) with the same or similar assessments (2b) contributed to the distribution (3).

5. Method (100) according to one of the preceding claims, wherein different contributions (41, 42) to the superposition (4) with the same parameterized functions, but mutually independent parameters (41a, 42a), are modelled (142a).

6. Method (100) according to one of the preceding claims, wherein at least one parameterized contribution (41, 42) is modelled (142b) as a statistical distribution, in particular as a distribution from the exponential family, for instance as a normal distribution, as an exponential distribution, as a gamma distribution, as a chi-square distribution, as a beta distribution, as an exponential Weibull distribution, and/or as a Dirichlet distribution.

7. Method (100) according to one of the preceding claims, wherein the parameters (41a, 42a) of the contributions (41, 42) are optimized (143a) according to a likelihood method and/or according to a Bayesian method, for instance with the expectation maximization algorithm, with the expectation/conditional maximization algorithm, with the expectation conjugate gradient algorithm, with the Riemann batch algorithm, with a Newton-based method, with a Markov Chain Monte Carlo-based method, and/or with a stochastic gradient algorithm.

8. Method (100) according to one of the preceding claims, wherein the assessment (2b) of at least one learning data set (2) is determined (145a) based on a local probability density, which outputs at least one contribution (41, 42) to the superposition (4) when the uncertainty (2a) of this learning data set (2) is supplied to it as an input, and/or based on a ratio of such local probability densities.

9. Method (100) according to one of the preceding claims, wherein the assessment (2b) of at least one learning data set (2) includes (145b) the contribution (41, 42) to which the learning data set (2) is assigned when optimizing (143) the parameters (41a, 42a) of the contributions (41, 42).

10. Method (100) according to one of the preceding claims, wherein the Kullback-Leibler divergence, the Hellinger distance, the Lévy distance, the Lévy-Prokhorov metric, the Wasserstein metric, the Jensen-Shannon divergence, and/or another scalar measure (43) of the extent to which these contributions (41, 42) differ from each other, is determined (146) from the contributions (41, 42).

11. Method (100) according to Claim 10, wherein a dependence of the scalar measure (43) on a number of epochs, and/or on a number of training steps, of the pre-training (110) of the variations (1a-1c) is determined (146a), wherein a number of epochs, and/or a number of training steps, for which the scalar measure (43) indicates a maximum distinction of the contributions (41, 42) to the superposition (4), is used (146b) to further determine uncertainties (2a) of learning data sets (2b).

12. Computer-implemented method (200), comprising the following steps:

• a trainable image classifier (1) for at least partially automated driving, which translates one or more input variables (11) into one or more output variables (13), is trained (210) with the method (100) according to one of Claims 1 to 11;
• the trainable image classifier (1) is operated (220) by supplying it with input variable values (11), wherein these input variable values (11) were obtained by means of a physical measurement process, and/or by means of a partial or complete simulation of such a measurement process, and/or by means of a partial or complete simulation of a technical system that can be observed with such a measurement process;
• a vehicle (50), and/or a classification system (60), and/or a quality control system for mass-produced products (70), and/or a system for medical imaging (80), is/are controlled (230) with a control signal (5) on the basis of the output variable values (13) supplied by the trainable image classifier (1).

13. Computer program containing machine-readable instructions that, when executed on one or more computers, cause the computer or the computers to carry out a method (100, 200) according to one of Claims 1 to 12.

14. Machine-readable data carrier comprising the computer program according to Claim 13.

15. Computer equipped with the computer program according to Claim 13 and/or with the machine-readable data carrier according to Claim 14.

**Revendications**

1. Procédé mis en œuvre par ordinateur (100) pour entraîner un classificateur d'images entraînable (1), lequel traduit une ou plusieurs grandeurs d'entrée (11) en une ou plusieurs grandeurs de sortie (13), au moyen de jeux de données d'apprentissage (2), qui contiennent des valeurs de grandeurs d'entrée d'apprentissage (11a) et des valeurs de grandeurs de sortie d'apprentissage (13a) associées,

chaque grandeur d'entrée codant les valeurs de pixels d'une image et chaque grandeur de sortie une classe,
chaque valeur de grandeur d'entrée d'apprentissage codant les valeurs de pixels d'une image et la valeur de grandeur de sortie d'apprentissage associée une classe attribuée à cette image,
au moins les valeurs de grandeur d'entrée d'apprentissage (11a) ayant été obtenues par un processus de mesure physique et/ou par une simulation partielle ou complète d'un tel processus de mesure et/ou par une simulation partielle ou complète d'un système technique observable avec un tel processus de mesure, comprenant les étapes suivantes :

• une pluralité de modifications (1a-1c) du classificateur d'images entraînable (1), qui diffèrent les unes des autres de telle manière qu'elles ne peuvent pas être transférées les unes dans les autres de manière coïncidante au fur et à mesure de l'apprentissage, sont pré-entraînées (110) respectivement au moins avec un sous-ensemble des jeux de données d'apprentissage (2) ;
• les valeurs de grandeur d'entrée d'apprentissage (11a) d'au moins un leu de données d'apprentissage (2) sont acheminées (120) à toutes les modifications (1a-1c) en tant que grandeurs d'entrée (11) ;
• à partir de l'écart des valeurs de grandeur de sortie (13) entre elles, en lesquelles les modifications (1a-1c) traduisent respectivement les valeurs de grandeur d'entrée d'apprentissage (11a), une mesure de l'incertitude (13b) de ces valeurs de grandeur de sortie (13) est déterminée et affectée (130) au jeu de données d'apprentissage (2) en tant que mesure de son incertitude (2a) ;
• à l'aide de l'incertitude (2a), une évaluation (2b) du jeu de données d'apprentissage (2) est déterminée (140), laquelle est une indication de la mesure dans laquelle l'affectation des valeurs de grandeur de sortie d'apprentissage (13a) aux valeurs de grandeur d'entrée d'apprentissage (11a) dans le jeu de données d'apprentissage (2) est pertinente ;

une distribution (3) des incertitudes (2a) étant déterminée (141) à l'aide d'une pluralité de jeux de données d'apprentissage (2) et l'évaluation (2b) étant déterminée (145) à l'aide de cette distribution (3) ;
la distribution (3) étant modélisée (142) en tant que superposition (4) de plusieurs contributions paramétrées (41, 42), lesquelles proviennent respectivement de jeux de données d'apprentissage (2) ayant une évaluation (2b) identique ou similaire, et les paramètres (41a, 42a) de ces contributions (41, 42) étant optimisés (143) de manière à minimiser l'écart de la distribution (3) par rapport à la superposition (4) modélisée afin de déterminer ainsi les contributions (41, 42),
des paramètres adaptables (12), qui caractérisent le comportement du classificateur d'images entraînable (1), étant optimisés (150) avec pour objectif d'améliorer la valeur d'une fonction de coût (14), cette fonction de coût (14) mesurant (151) dans quelle mesure le classificateur d'images entraînable (1) représente les valeurs de grandeur d'entrée d'apprentissage (11a) contenues dans des jeux de données d'apprentissage (2) sur les valeurs de grandeur de sortie d'apprentissage (13a) associées, une pondération d'au moins un jeu de données d'apprentissage (2) dans la fonction de coût (14) dépendant (152) de son évaluation (2b).

2. Procédé (100) selon la revendication 1, un jeu de données d'apprentissage (2) n'étant plus pris en compte dans la fonction de coût (14) en réponse au fait que l'évaluation (2b) de ce jeu de données d'apprentissage (2) satisfait à un critère prédéfini.

3. Procédé (100) selon l'une des revendications 1 ou 2, une mise à jour (13a*) d'au moins une valeur de grandeur de sortie d'apprentissage (13a) contenue dans ce jeu de données d'apprentissage (2) étant demandée (170) en réponse au fait que l'évaluation (2b) d'un jeu de données d'apprentissage (2) satisfait à un critère prédéfini (160).

4. Procédé (100) selon l'une des revendications 1 à 3, l'écart entre la distribution (3) et la superposition (4) servant au moins à déterminer (144) si, pour l'essentiel, seuls des jeux de données d'apprentissage (2) ayant des évaluations (2b) identiques ou similaires ont contribué à la distribution (3).

5. Procédé (100) selon l'une des revendications précédentes, différentes contributions (41, 42) à la superposition (4) étant modélisées (142a) avec des fonctions paramétrées identiques, mais avec des paramètres (41a, 42a) indépendants les uns des autres.

6. Procédé (100) selon l'une des revendications précédentes, au moins une contribution paramétrée (41, 42) étant modélisée (142b) en tant que distribution statistique, notamment en tant que distribution issue de la famille exponentielle, comme par exemple une distribution normale, une distribution exponentielle, une distribution gamma, une distribution du khi deux, une distribution bêta, une distribution exponentielle de Weibull et/ou une distribution de Dirichlet.

7. Procédé (100) selon l'une des revendications précédentes, les paramètres (41a, 42a) des contributions (41, 42) étant déterminés selon une méthode de vraisemblance et/ou selon une méthode bayésienne, comme par exemple avec l'algorithme de maximisation de l'espérance, avec l'algorithme de maximisation conditionnelle de l'espérance, avec l'algorithme du gradient conjugué de l'espérance, avec l'algorithme en lot de Riemann, avec un procédé basé sur Newton, avec un procédé basé une chaîne de Markov de Monte Carlo et/ou avec un algorithme stochastique à gradient (143a).

8. Procédé (100) selon l'une des revendications précédentes, l'évaluation (2b) d'au moins un jeu de données d'apprentissage (2) étant déterminée (145a) à l'aide d'une densité de probabilité locale, qui produit au moins une contribution (41, 42) à la superposition (4) lorsque l'incertitude (2a) de ce jeu de données d'apprentissage (2) lui est acheminée en entrée, et/ou à l'aide d'un rapport de telles densités de probabilité locales.

9. Procédé (100) selon l'une des revendications précédentes, au moins un jeu de données d'apprentissage (2) intervenant (145b) dans l'évaluation (2b), auquel est affectée la contribution (41, 42) du jeu de données d'apprentissage (2) lors de l'optimisation (143) des paramètres (41a, 42a) des contributions (41, 42).

10. Procédé (100) selon l'une des revendications précédentes, la mesure dans laquelle des contributions (41, 42) diffèrent les unes des autres étant déterminée (146) à partir de ces contributions (41, 42), de la divergence de Kullback-Leibler, de la distance de Hellinger, de la distance de Lévy, de l'indice de mesure de Lévy-Prochorov, de l'indice de mesure de Wasserstein, de la divergence de Jensen-Shannon et/ou d'une autre mesure scalaire (43) de cela.

11. Procédé (100) selon la revendication 10, une dépendance de la mesure scalaire (43) à un nombre d'époques et/ou à un nombre d'étapes d'entraînement du pré-entraînement (110) des modifications (1a-1c) étant déterminée (146a), un nombre d'époques et/ou un nombre d'étapes d'entraînement, pour lequel la mesure scalaire (43) indique une distinction maximale des contributions (41, 42) à la superposition (4), étant utilisé (146b) pour la détermination ultérieure d'incertitudes (2a) de jeux de données d'apprentissage (2b).

12. Procédé mis en œuvre par ordinateur (200) comprenant les étapes suivantes :

• un classificateur d'images entraînable (1) pour la conduite au moins partiellement automatisée, lequel traduit une ou plusieurs grandeurs d'entrée (11) en une ou plusieurs grandeurs de sortie (13), est entraîné (210) à l'aide du procédé (100) selon l'une des revendications 1 à 11 ;
• le classificateur d'images entraînable (1) est utilisé (220) en ce que des valeurs de grandeurs

25      **EP 3 959 660 B1**      26

d'entrée (11) lui sont acheminées, ces valeurs de grandeurs d'entrée (11) ayant été obtenues par un processus de mesure physique et/ou par une simulation partielle ou complète d'un tel processus de mesure et/ou par une simulation partielle ou complète d'un système technique observable avec un tel processus de mesure ;
• en fonction des valeurs de grandeur de sortie (13) fournies par le classificateur d'images entraînable (1), un véhicule (50) et/ou un système de classification (60) et/ou un système de contrôle qualité de produits (70) fabriqués en série et/ou un système d'imagerie médicale (80) est commandé (230) à l'aide d'un signal de commande (5).

13. Programme informatique comprenant des instructions lisibles par machine qui, lorsqu'elles sont exécutées sur un ou plusieurs ordinateurs, amènent le ou les ordinateurs à mettre en œuvre un procédé (100, 200) selon l'une des revendications 1 à 12.

14. Support de données lisible par machine, comprenant le programme informatique selon la revendication 13.

15. Ordinateur, équipé du programme informatique selon la revendication 13 et/ou du support de données lisible par machine selon la revendication 14.

**14**

Fig. 1

100 ⟍  [210]  200 ⟍

⟍ 1,12

11

[220]

⟍ 13

[230]

⟍ 5

50,60,70,80

# Fig. 2

ρ

3

4

41

42

u,2a

# Fig. 3

Fig. 4

**EP 3 959 660 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Identifying Mislabeled Training Data. **C.E. BROD-LEY et al.** arXiv.org. Cornell University Library, 01 June 2011